(19) Europäisches Patentamt

European Patent Office

Office européen des brevets

(11) EP 1 058 158 A2

# (12) EUROPEAN PATENT APPLICATION

(43) Date of publication:
06.12.2000 Bulletin 2000/49

(51) Int. Cl.⁷: **G03G 15/00**, H04N 1/00

(21) Application number: 00111557.5

(22) Date of filing: 30.05.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **31.05.1999 JP 15287399**
**28.04.2000 JP 2000131462**

(71) Applicant:
**Olympus Optical Co., Ltd.**
**Tokyo (JP)**

(72) Inventor:
**Ohsawa, Kenro,**
**c/oIntellectual Property Department**
**Hachioji-shi, Tokyo (JP)**

(74) Representative: **Kuhnen & Wacker**
**Patentanwaltsgesellschaft mbH,**
**Alois-Steinecker-Strasse 22**
**85354 Freising (DE)**

## (54) Color image display system

(57) An image data conversion apparatus (2) includes color correction units for correcting the difference in color reproduction characteristic between projectors (3A, 3B), bias correction units for correcting the bias so as to display partial color images on a predetermined set bias, data distribution units for distributing image data to display, at a predetermined ratio, the partial color images contained in the overlap region between the partial color images, and nonuniformity correction units for correcting color nonuniformities in the partial color images.

FIG. 1

**Description**

The present invention relates to a color image display system and, more particularly, to a color image display system having an image data conversion apparatus which converts input image data into display color image data to synthetically display partial color images displayed by a plurality of partial color image display apparatuses as a color image of one frame.

In recent years, color image display systems for synthesizing display images by a plurality of projectors and displaying one precise and large image have been proposed and put into practical use.

More specifically, each system projects and displays partial color images on a screen using a plurality of projectors, thereby synthetically displaying a color image of one frame on the screen.

In such a system for displaying a color image of one frame by synthesizing display images by a plurality of projectors, a pixel position shifts or reproduction luminance changes between display images by the projectors due to geometric distortion or luminance difference between the projectors.

Additionally, since this system generally synthesizes the display images by the projectors by making them partially overlap, color misregistration occurs in the overlap region due to the adjustment error in each display image.

Conventionally, to solve these problems, the geometric distortion is corrected by adjusting the projection position of each projector or correcting image data, and color misregistration is corrected by correcting image data in the overlap region between the display images by the projectors.

However, according to examinations by the present inventors, only the above-described geometric distortion correction and color misregistration correction in the overlap region between the display images by the projectors are insufficient to finally synthetically display a color image of one frame with a satisfactory quality.

It is an object of the present invention to provide a color image display system capable of synthetically displaying a plurality of partial color images as a color image of one frame with a satisfactory quality.

In order to solve the above problems, according to the present invention, in a color image display system comprising a plurality of partial color image display means for, upon receiving display color image data, displaying partial color images to be synthetically displayed as a color image of one frame, and image data conversion means for converting input color image data into the display color image data to be input to the partial color image display means, the image data conversion means or partial color image display means is designed to have the following arrangement.

(1) The image data conversion means comprises color correction means for correcting the difference in color reproduction characteristic between the partial color image display means. With this color correction means, even when the plurality of partial color image display means have different color reproduction characteristics, displayed colors match in the entire color image synthetically displayed as one frame. Hence, discontinuous joints between the partial color images are eliminated, and a high-quality color image can be displayed as a whole.

(2) The image data conversion means comprises correction means for correcting a bias of the input color image data so as to display the partial color images on a predetermined set bias in the plurality of partial color image display means. When the correction means for correcting the bias is provided, a case wherein the display color image data input to the partial color image display means has a value smaller than the bias and cannot be reproduced is eliminated or reduced.

(3) The image data conversion means comprises data distribution means for distributing the input color image data to the display color image data to be input to the partial color image display means so as to display, at a predetermined ratio in an overlap region, the partial color images contained in the overlap region between the partial color images displayed by the partial color image display means. With this data distribution means, even in the overlap region where the partial color images by the plurality of partial color image display means overlap, a desired color can be accurately displayed.

(4) The image data conversion means comprises nonuniformity correction means for correcting a color nonuniformity in partial color image displayed by the partial color image display means. When the partial color image displayed by each partial color image display means is corrected by the color nonuniformity correction means, high-quality display is done in each partial color image, and also discontinuous boundaries between the partial color image due to the color nonuniformity which changes in units of partial color image display means can be prevented.

(5) The partial color image display means are designed to display the partial color images with display luminance lower in an overlap region between the partial color image displayed by one partial color image display means and the partial color image displayed by the other partial color image display means than in a remaining region. When each partial color image display means has such a design, an increase in bias in the overlap region can be eliminated or reduced.

(6) As the partial color image display means in (1) to (5), a multi-primary-color display having at least four primary colors may be used whereby a wider color reproduction range can be attained.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing the schematic arrangement of a color image display system according to the first embodiment of the present invention;

FIG. 2 is a block diagram showing the internal arrangement of an image data conversion apparatus of the first embodiment;

FIG. 3 is a view showing a measurement system for measuring the color reproduction characteristics of projectors;

FIG. 4 is a block diagram showing the internal arrangement of a color correction unit of the first embodiment;

FIG. 5 is a view showing partial display images by the projectors and the bias distribution of the synthesized display images in the first embodiment;

FIGS. 6A, 6B, and 6C are views showing examples of a set bias in the first embodiment;

FIG. 7 is a view schematically showing the actual bias and image data, which are projected onto the white axis in the first embodiment;

FIG. 8 is a view showing the distribution of distribution coefficients of data distribution units of the first embodiment;

FIG. 9 is a block diagram showing the internal arrangement of an image data conversion apparatus according to the second embodiment of the present invention;

FIG. 10 is a block diagram showing the schematic arrangement of a color image display system according to the third embodiment of the present invention;

FIG. 11 is a block diagram showing the internal arrangement of an image data conversion apparatus of the third embodiment;

FIG. 12 is a view showing the concept of gain/bias correction in the third embodiment;

FIG. 13 is a block diagram showing the internal arrangement of an image data conversion apparatus according to the fourth embodiment of the present invention;

FIG. 14 is a block diagram showing the internal arrangement of a color correction unit of the fourth embodiment;

FIGS. 15A and 15B are views showing arrangement examples of projectors in the fourth embodiment;

FIG. 16 is a view showing the transmittance distributions of ND filters installed in the projectors;

FIG. 17 is a view showing the distribution of a synthetic bias by the projector having the ND filter with the transmittance distribution shown in FIG. 16;

FIGS. 18A to 18D are views showing synthetic bias distributions;

FIG. 19 is a view showing another arrangement example of the projector in the fourth embodiment;

FIG. 20 is a view showing still another arrangement example of the projector in the fourth embodiment;

FIG. 21 is a view showing still another arrangement example of the projector in the fourth embodiment;

FIG. 22 is a view showing still another arrangement example of the projector in the fourth embodiment; and

FIG. 23 is a view showing another distribution of distribution coefficients of a data distribution unit.

The embodiments of the present invention will be described below with reference to the accompanying drawing.


(First Embodiment)

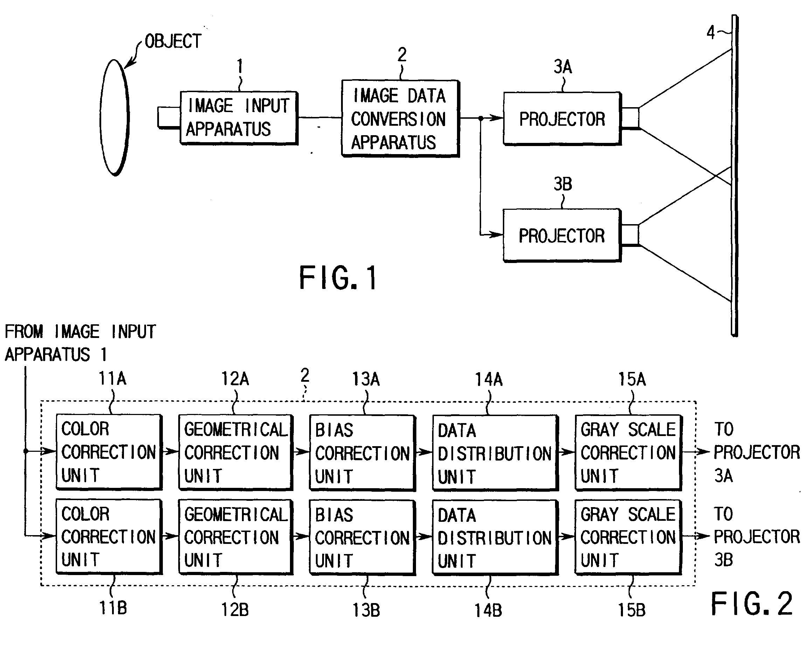

FIG. 1 shows a color image display system according to the first embodiment of the present invention. This color image display system comprises an image input apparatus 1, image data conversion apparatus 2, projectors 3A and 3B, and screen 4.

The image input apparatus 1 obtains, as input color image data, image data having three channels for RGB (red, green, and blue) per pixel, which is obtained by sensing an object using, e.g., a digital camera.

The image input apparatus 1 has a linear sensitivity characteristic, and the input color image data is also linear with respect to luminance. The input color image data obtained by the image input apparatus 1 is output to the image data conversion apparatus 2.

The image data conversion apparatus 2 converts the input color image data from the image input apparatus 1 into display color image data for the two projectors 3A and 3B serving as partial color image display means and outputs the image data to the corresponding projectors 3A and 3B.

In this embodiment, each of the projectors 3A and 3B is a 3-primary-color projector using RGB colors, which projects and displays a partial color image on the screen 4 in accordance with the input display color image data.

The partial color image displayed on the screen 4 by the projector 3A or 3B will also be referred to as a partial display image hereinafter. The partial display images are synthetically displayed on the screen 4 as a large color image of one frame (also to be referred to as a synthesized display image hereinafter) as a whole.

In this case, the partial display images by the projectors 3A and 3B partially overlap on the synthesized display image on the screen 4, as shown in FIG. 1.

The image data conversion apparatus 2 will be described next in detail with reference to FIG. 2.

The image data conversion apparatus 2 is constructed by color correction units 11A and 11B, geometrical correction units 12A and 12B, bias correction units 13A and 13B, data distribution units 14A and 14B, and gray scale correction units 15A and 15B, which are prepared in correspondence with the projectors 3A and 3B, respectively.

The color correction units 11A and 11B, geometrical correction units 12A and 12B, bias correction units 13A and 13B, data distribution units 14A and 14B, and gray scale correction units 15A and 15B have identical structures. The arrangement of each part of the image data conversion apparatus 2 will be described below.

[Color Correction Units 11A and 11B]

Input color image data (input signal values R, G, and B) within image regions displayable by the projectors 3A and 3B are input from the image input apparatus 1 to the color correction units 11A and 11B.

The input color image data do not depend on the characteristics of the projectors 3A and 3B. The signal values R, G, and B of these input image data are converted into unique signal values (called display signal values) suitable to display by the projectors 3A and 3B by the color correction units 11A and 11B in accordance with the color reproduction characteristics of the projectors 3A and 3B, respectively.

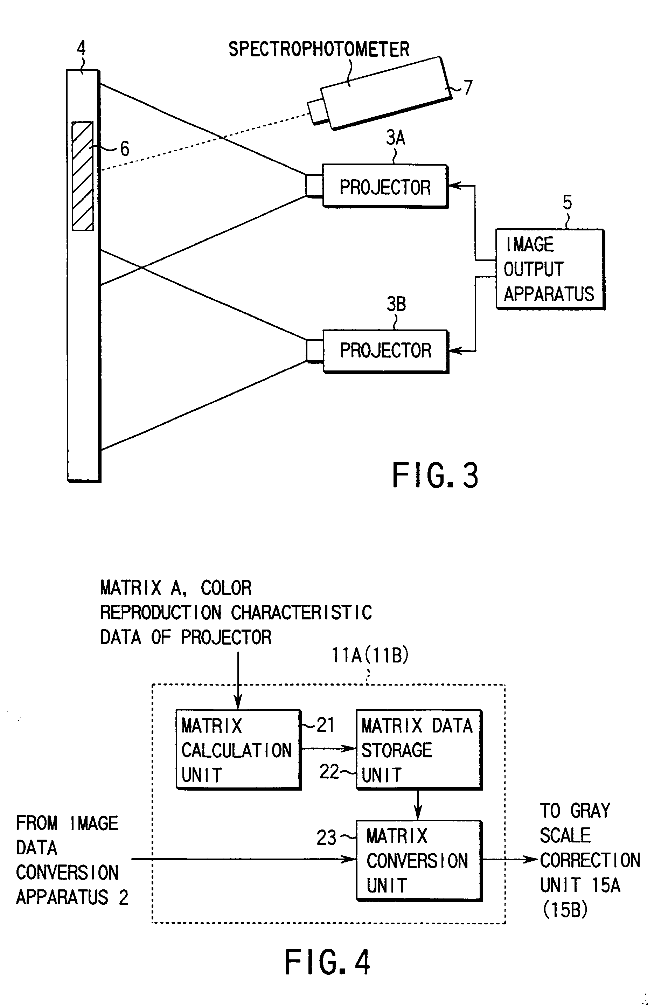

FIG. 3 shows a measurement system for measuring the color reproduction characteristics of projectors 3A and 3B. On the basis of color image data output from an image output apparatus 5, single-color images of R (red), G (green), and B (blue) are projected onto the screen 4 by the projectors 3A and 3B.

XYZ tristimulus values in the maximum light emission of these single-color images are measured from a patch image 6 on the screen 4 by a measurement instrument such as a spectrophotometer 7, thereby obtaining the color reproduction characteristics of the projectors 3A and 3B.

To measure the color reproduction characteristics, an image sensing apparatus such as a digital camera may be used. In this case, single-color images of R (red), G (green), and B (blue) are projected onto the screen 4 by the projectors 3A and 3B on the basis of color image data output from the image output apparatus 5, and the images in the maximum light emission of these single-color images are sensed by the image sensing apparatus to obtain signal values, thereby obtaining the color reproduction characteristics of the projectors 3A and 3B.

The resultant color reproduction characteristics of the projectors 3A and 3B are supplied to the color correction units 11A and 11B, respectively. Each of the color correction units 11A and 11B converts the signal values R, G, and B of the input color image data into signal values (display signal values) R', G', and B' of display color image data by linear conversion represented by

$$
\begin{pmatrix} R' \\ G' \\ B' \end{pmatrix} = \begin{pmatrix} X_r & X_g & X_b \\ Y_r & Y_g & Y_b \\ Z_r & Z_g & Z_b \end{pmatrix}^{-1} \begin{pmatrix} a_{11} & a_{12} & a_{13} \\ a_{21} & a_{22} & a_{23} \\ a_{31} & a_{32} & a_{33} \end{pmatrix} \begin{pmatrix} R \\ G \\ B \end{pmatrix} \qquad \cdots (1)
$$

where $X_r$, $X_g$, and $X_b$ are X values in the maximum light emission by the signal values R', G', and B', $Y_r$, $Y_g$, and $Y_b$ are Y values in the maximum light emission by the signal values R', G', and B', and $Z_r$, $Z_g$, and $Z_b$ are Z values in the maximum light emission by the signal values R', G', and B'.

The color reproduction characteristics of the projectors 3A and 3B are represented by the X, Y, and Z values. Additionally, $a_{ij}$ is an element of a matrix A for converting the input color image data R, G, and B into the XYZ tristimulus values.

To measure the color reproduction characteristics, an image sensing apparatus may be used. In this case, as described above, single-color images of R (red), G (green), and B (blue) are projected onto the screen 4 by the projectors 3A and 3B on the basis of color image data output from the image output apparatus 5, and the images in the maximum light emission of these single-color images are sensed by the image sensing apparatus to obtain signal values, thereby obtaining the color reproduction characteristics of the projectors 3A and 3B.

The resultant color reproduction characteristics of the projectors 3A and 3B are supplied to the color correction units 11A and 11B, respectively. Each of the color correction units 11A and 11B converts the signal values R, G, and B of the input color image data into signal values (display signal values) R', G', and B' of display color image data by linear conversion represented by

$$\begin{pmatrix} R' \\ G' \\ B' \end{pmatrix} = \begin{pmatrix} X_r X_g X_b \\ Y_r Y_g Y_b \\ Z_r Z_g Z_b \end{pmatrix}^{-1} \begin{pmatrix} a_{11} a_{12} a_{13} \\ a_{21} a_{22} a_{23} \\ a_{31} a_{32} a_{33} \end{pmatrix} \begin{pmatrix} R \\ G \\ B \end{pmatrix} \qquad \cdots (2)$$

where $a_{ij}$ is an element of the matrix A for converting the input color image data R, G, and B into the XYZ tristimulus values, $X_r$, $Y_r$, and $Z_r$ are XYZ values in the maximum light emission of R (red), $X_g$, $Y_g$, and $Z_g$ are XYZ values in the maximum light emission of G (green), and $X_b$, $Y_b$, and $Z_b$ are XYZ values in the maximum light emission of B (blue). These values are calculated by next equation on the basis of the signal values output from the image sensing apparatus.

$$\begin{pmatrix} X_r X_g X_b \\ Y_r Y_g Y_b \\ Z_r Z_g Z_b \end{pmatrix} = \begin{pmatrix} M_{11} M_{12} \ldots M_{1n} \\ M_{21} M_{22} \ldots M_{2n} \\ M_{31} M_{32} \ldots M_{3n} \end{pmatrix} \begin{pmatrix} S_{r1} S_{g1} S_{b1} \\ S_{r2} S_{g2} S_{b2} \\ S_{rn} S_{gn} S_{bn} \end{pmatrix} \qquad \cdots (3)$$

where a matrix M is a matrix (chromaticity conversion matrix) for converting image signal values S obtained by the image sensing apparatus into XYZ values, and $\underline{n}$ is the number of channels of the image sensing apparatus.

The image signal value S is a signal value obtained by the image sensing apparatus. For example, an image signal value $S_{r1}$ means the signal value of the first channel in the maximum light emission of R (red). The chromaticity conversion matrix M is obtained in advance on the basis of the input/output characteristics of the image sensing apparatus.

As an image sensing apparatus, a TV camera, digital camera, or multiband camera having at least four channels can be used. In the above description, the images in the maximum light emission of the single-color images of RGB are sensed to acquire the color reproduction characteristics. However, an arbitrary color images may be used as long as they are combination of independent signal values.

If the above-described chromaticity conversion matrix M is not obtained in advance, color correction of each projector is performed on the basis of next equation.

$$\begin{pmatrix} R' \\ G' \\ B' \end{pmatrix} = \begin{pmatrix} S_{r1} S_{g1} S_{b1} \\ S_{r2} S_{g2} S_{b2} \\ S_{r3} S_{g3} S_{b3} \end{pmatrix}^{-1} \begin{pmatrix} a'_{11} a'_{12} a'_{13} \\ a'_{21} a'_{22} a'_{23} \\ a'_{31} a'_{32} a'_{33} \end{pmatrix} \begin{pmatrix} R \\ G \\ B \end{pmatrix} \qquad \cdots (4)$$

where $a'_{ij}$ is an element of a matrix A' for converting the input color image data R, G, and B into signal values in a desired RGB space. The value S is a signal value acquired by the image sensing apparatus. For example, a signal value $S_{r1}$ means the signal value of the first channel in the maximum light emission of R (red).

FIG. 4 shows the detailed arrangement of the color correction unit 11A (11B). The color correction unit 11A (11B) comprises a matrix calculation unit 21, matrix data storage unit 22, and matrix conversion unit 23.

The above-described matrix A and color reproduction characteristic of the projector 3A (3B) are measured or set in advance and input to the matrix calculation unit 21. The matrix calculation unit 21 calculates a matrix for converting the signal values R, G, and B of the input color image data into the display signal values R', G', and B'. The matrix calculated by the matrix calculation unit 21 is stored in the matrix data storage unit 22.

In conversion, the matrix conversion unit 23 reads out predetermined matrix data from the matrix data storage unit 22 and converts the signal values R, G, and B of the input color image data into the display signal values R', G', and B' on the basis of equation (1). The matrix data stored in the matrix data storage unit 22 changes depending on a change in characteristics of the projector 3A (3B) or in units of image input apparatuses 1. For this reason, the matrix data storage unit 22 can store/rewrite a plurality of data. Thus, the color correction units 11A and 11B correct the color reproduction characteristics of the projectors 3A and 3B, respectively.

[Geometrical Correction Units 12A and 12B]

The display signal values R', G', and B' output from the color correction units 11A and 11B are input to the geometrical correction units 12A and 12B. The geometrical correction units 12A and 12B perform geometrical correction on the display signal values R', G', and B' such that the partial display images are projected at correct positions by the projectors 3A and 3B.

Details of the geometrical correction are disclosed in Jpn. Pat. Appln. KOKAI Publication No. 9-326981, and a detailed description thereof will be omitted.

[Bias Correction Units 13A and 13B]

The signal values R', G', and B' of the color image data geometrically corrected by the geometrical correction units 12A and 12B are input to the bias correction units 13A and 13B.

The bias correction units 13A and 13B set a set bias at each pixel position of the projectors 3A and 3B on the basis of actual bias data of the projectors 3A and 3B and position data of the overlap region between the partial display images by the projectors 3A and 3B, and corrects the biases of the signal values R', G', and B' such that the partial display images are displayed on the set bias. The actual bias means a color displayed when all the RGB input signals to the projectors 3A and 3B are 0.

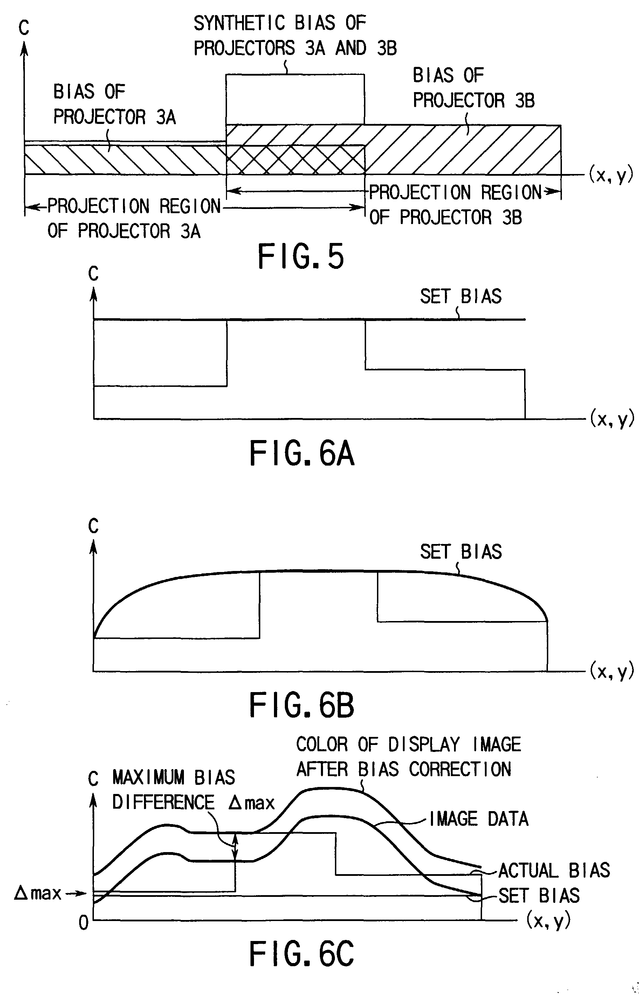

FIG. 5 shows the biases of the projectors 3A and 3B (actual biases of the partial display images by the projectors 3A and 3B) and an example of bias distribution of the synthetic bias of the projectors 3A and 3B (actual bias of the synthesized display image). FIGS. 6A to 6C show examples of a set bias.

Referring to FIGS. 5 and 6A to 6C, the abscissa represents two-dimensional pixel positions (x,y), and the ordinate represents a three-dimensional color space C.

Referring to FIG. 6A, a predetermined value equal to the maximum value of the actual bias of the entire display screen of the projectors 3A and 3B is set as a set bias.

Referring to FIG. 6B, near the center of the screen including the maximum value of the actual bias of the projectors 3A and 3B, the set bias is set to be equal to the maximum value of the actual bias. The set bias smoothly decreases toward the periphery of the screen.

The maximum value of the actual bias of the projectors 3A and 3B means a bias with which the projective vector of a predetermined color vector (e.g., white vector) is maximized.

When image data is displayed with a distribution on the set bias shown in FIG. 6A or 6B, the image can be prevented from becoming dark and impossible to display because of the image data value smaller than the actual bias of the projectors 3A and 3B, or being clipped and displayed as an unnatural image.

Referring to FIG. 6C, a set bias is obtained in units of pixel positions on the basis of the relationship between the actual bias in the entire display region of the projectors 3A and 3B and all image data input to the bias correction units 13A and 13B.

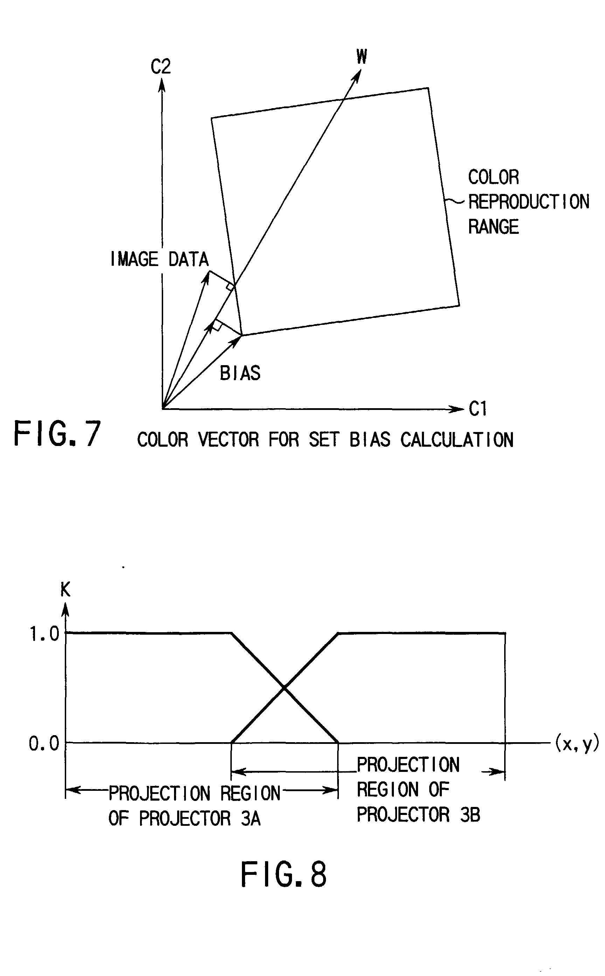

More specifically, a set bias is set such that the difference vector in projective vector to white vector (white axis) between image data and actual bias (i.e., the difference in color projected onto the white axis between image data and actual bias) is maximized. FIG. 7 schematically shows the actual bias and image data, which are projected onto the white axis.

Let $B(x,y)$ be actual bias at each pixel position of the projectors 3A and 3B, $I(x,y)$ be image data corresponding to each pixel position, and W be the white axis of the display image. Norms $N_B(x,y)$ and $N_I(x,y)$ of the projective vectors of the actual bias $B(x,y)$ and image data $I(x,y)$ onto the white axis W are given by

$$N_B(x,y) = (B(x,y) \cdot W)/\|W\| \tag{5}$$

$$N_I(x,y) = (I(x,y) \cdot W)/\|W\|$$

where $\cdot$ is inner product calculation, and $\|\ \|$ is the norm of a vector. A set bias is set as a vector in the direction of white axis W, which has a norm $N_W$ at a pixel position (x,y) at which the norm difference $\Delta N(x,y) = N_B(x,y) - N_I(x,y)$ between the projective vectors is maximized, and is given by

$$B_S = N_W W/\|W\| \tag{6}$$

When a set bias is defined in units of pixel positions on the basis of the relationship between actual bias of the projectors 3A and 3B and image data input to the bias correction units 13A and 13B for actual display by the projectors 3A and 3B, color misregistration by the set bias can be minimized. In addition, generation of image data that is darker than the projective value of the set bias to the white axis and therefore cannot be reproduced can be avoided.

Let $R_0(x,y)$, $G_0(x,y)$, and $B_0(x,y)$ be display signal values corresponding to the actual bias at each pixel position of the projectors 3A and 3B, and $R_b(x,y)$, $G_b(x,y)$, and $B_b(x,y)$ be display signal values corresponding to the set bias. Display signal values $R''(x,y)$, $G''(x,y)$, and $B''(x,y)$ after bias correction are given by

$$R''(x,y) = R'(x, y) + R_b(x, y) - R_0(x, y) \qquad (7)$$

$$G''(x,y) = G'(x,y) + G_b(x,y) - G_0(x,y)$$

$$B''(x,y) = B'(x,y) + B_b(x,y) - B_0(x,y)$$

Using tristimulus values $X_0(x,y)$, $Y_0(x,y)$, and $Z_0(x,y)$ of the actual bias, the display signal values $R_0(x,y)$, $G_0(x,y)$, and $B_0(x,y)$ corresponding to the actual bias at each pixel position are given by

$$\begin{pmatrix} R_0(x,y) \\ G_0(x,y) \\ B_0(x,y) \end{pmatrix} = \begin{pmatrix} X_r X_g X_b \\ Y_r Y_g Y_b \\ Z_r Z_g Z_b \end{pmatrix}^{-1} \begin{pmatrix} X_0(x,y) \\ Y_0(x,y) \\ Z_0(x,y) \end{pmatrix} \qquad \cdots(8)$$

In a similar way, using tristimulus values $X_b(x,y)$, $Y_b(x,y)$, and $Z_b(x,y)$, the display signal values $R_b(x,y)$, $G_b(x,y)$, and $B_b(x,y)$ corresponding to the set bias at each pixel position are given by

$$\begin{pmatrix} R_b(x,y) \\ G_b(x,y) \\ B_b(x,y) \end{pmatrix} = \begin{pmatrix} X_r X_g X_b \\ Y_r Y_g Y_b \\ Z_r Z_g Z_b \end{pmatrix}^{-1} \begin{pmatrix} X_b(x,y) \\ Y_b(x,y) \\ Z_b(x,y) \end{pmatrix} \qquad \cdots(9)$$

As the tristimulus values $X_0(x,y)$, $Y_0(x,y)$, and $Z_0(x,y)$ of the actual bias, XYZ values measured near the central portion of the projectors 3A and 3B are used, as in measuring the color reproduction characteristics of the projectors 3A and 3B by the measurement system shown in FIG. 3.

If the tristimulus values $X_0(x,y)$, $Y_0(x,y)$, and $Z_0(x,y)$ cannot be sufficiently accurately measured or fall outside the luminance range measurable by the measurement instrument, $X_0(x,y) = Y_0(x,y) = Z_0(x,y) = 0$ may be assumed.

In the overlap region between the partial display images by the projectors 3A and 3B, XYZ values calculated as the sum of biases of the projectors 3A and 3B are used as the tristimulus values $X_0(x,y)$, $Y_0(x,y)$, and $Z_0(x,y)$.

The actual bias and set bias of the projectors 3A and 3B are measured or set in advance and stored in the bias correction units 13A and 13B. A plurality of bias data are stored in accordance with a change in characteristics of the projectors 3A and 3B or the difference in set bias setting method and appropriately rewritten.

[Data Distribution Units 14A and 14B]

The data distribution units 14A and 14B distribute the color image data after bias correction, which are input from the bias correction units 13A and 13B, to display color image data in units of pixels.

In this image data distribution processing, the color image data input to the data distribution units 14A and 14B are corrected and distributed to the output side such that, in the overlap region between the partial display images by the projectors 3A and 3B, the partial display images included in the overlap region are displayed at a predetermined ratio.

More specifically, this data distribution processing is performed by multiplying the signal values of display color image data after bias correction by distribution coefficients K1(x,y) and K2(x,y) so that the sum of display signal values of display color image data to be input to the projectors 3A and 3B matches the sum of display signal values of original display color image data after bias correction, as shown in FIG. 8.

Display signal values R'''1(x,y), G'''1(x,y), and B'''1(x,y) of RGB colors at the pixel position (x,y), which are distributed to the projector 3A, are given by

$$R'''1(x,y) = K1(x,y)R''(x,y) \tag{10}$$

$$G'''1(x,y) = K1(x,y)G''(x,y)$$

$$B'''1(x,y)=K1(x,y)B''(x,y)$$

Display signal values R'''2(x,y), G'''2(x,y), and B'''2(x,y) of RGB colors at the pixel position (x,y), which are distributed to the projector 3B, are given by

$$R'''2(x,y) = K2(x,y)R''(x,y) \tag{11}$$

$$G'''2(x,y) =K2(x,y)G''(x,y)$$

$$B'''2(x,y) = K2(x,y)B''(x,y)$$

for

$$K2(x,y) = 1-K1(x,y) \tag{12}$$

The distribution coefficients K1(x,y) and K2(x,y) are set to be smaller as the pixel position becomes far from the central position of the partial display images projected by the projectors 3A and 3B, as shown in FIG. 8.

When a random number is added to one of the distribution coefficients K1(x,y) and K2(x,y) set in the above-described way, and the distribution coefficients are re-calculated, the boundary between the partial display images in the overlap region due to a display error can be made unnoticeable. For example, the distribution coefficients K1(x,y) and K2(x,y) are re-calculated on the basis of

$$K1'(x,y)=K1(x,y)+R(K1(x,y)) \tag{13}$$

$$K2'(x,y) = 1-K1'(x,y)$$

K1'(x,y) and K2'(x,y) are re-calculated distribution coefficients. R(x) is a random number within the following range

$$-X \leq R(X) \leq 1-X \tag{14}$$

The distribution coefficients K1(x,y) and K2(x,y) before re-calculation are set in advance in the data distribution units 14A and 14B.

Processing from the color correction units 11A and 11B to the data distribution units 14A and 14B is summarized as follows. The input color image data R(x,y), G(x,y), and B(x,y) at the pixel position (x,y) are converted into display color image data R'''(x,y), G'''(x,y), and B'''(x,y) given by

$$\begin{pmatrix} R'''(x,y) \\ G'''(x,y) \\ B'''(x,y) \end{pmatrix}$$
$$= \begin{pmatrix} K(x,y) & 0 & 0 \\ 0 & K(x,y) & 0 \\ 0 & 0 & K(x,y) \end{pmatrix} \left( \begin{pmatrix} X_r & X_g & X_b \\ Y_r & Y_g & Y_b \\ Z_r & Z_g & Z_b \end{pmatrix}^{-1} \begin{pmatrix} a_{11} & a_{12} & a_{13} \\ a_{21} & a_{22} & a_{23} \\ a_{31} & a_{32} & a_{33} \end{pmatrix} \begin{pmatrix} R(x,y) \\ G(x,y) \\ B(x,y) \end{pmatrix} + \begin{pmatrix} R_b(x,y) \\ G_b(x,y) \\ B_b(x,y) \end{pmatrix} - \begin{pmatrix} R_0(x,y) \\ G_0(x,y) \\ B_0(x,y) \end{pmatrix} \right)$$
$$\cdots (15)$$

where K is the distribution coefficient K1(x,y) or K2(x,y), or the re-calculated distribution coefficient K1'(x,y) or K2'(x,y).

[Gray Scale Correction Units 15A and 15B]

The color image data R'''(x,y), G'''(x,y), and B'''(x,y) output from the data distribution units 14A and 14B are input to the corresponding gray scale correction units 15A and 15B. The gray scale correction units 15A and 15B execute gray scale correction on the color image data R'''(x,y), G'''(x,y), and B'''(x,y) output from the data distribution units 14A and 14B to obtain RGB data $R_{out}$, $G_{out}$, and $B_{out}$ given by

$$R_{out} = \gamma_r^{-1}(R''') \qquad (16)$$

$$G_{out} = \gamma_g^{-1}(G''')$$

$$B_{out} = \gamma_b^{-1}(B''')$$

and output the RGB data $R_{out}$, $G_{out}$, and $B_{out}$ to the projectors 3A and 3B as final display color image data.

In this case, $\gamma_c^{-1}(d)$ ( c = r, g, b ) is gray scale correction data as an inverse function of output luminance with respect to an input signal value $\underline{d}$ whose maximum value is normalized to 1.

This gray scale correction data $\gamma_c^{-1}(d)$ is obtained by measuring the display luminance of the projectors 3A and 3B ranging from 0 to the maximum value of the input signal value of each of the RGB primary colors of the projectors 3A and 3B using the same measurement system as shown in FIG. 3, and stored in advance in the gray scale correction units 15A and 15B.

To acquire the gray scale correction data $\gamma_c^{-1}(d)$, a spectrophotometer, colorimeter, luminance meter, or image sensing apparatus can be used. A method of acquiring gray scale correction data using a spectrophotometer, colorimeter, or luminance meter for spot light measurement is accurate but time-consuming.

To the contrary, according to a method of acquiring gray scale correction data using an image sensing apparatus, when a gradation pattern is displayed and sensed, the gray scale correction data can be acquired by one sensing operation. In this case, when the shading of the image sensing apparatus is corrected, more accurate data can be acquired.

(Second Embodiment)

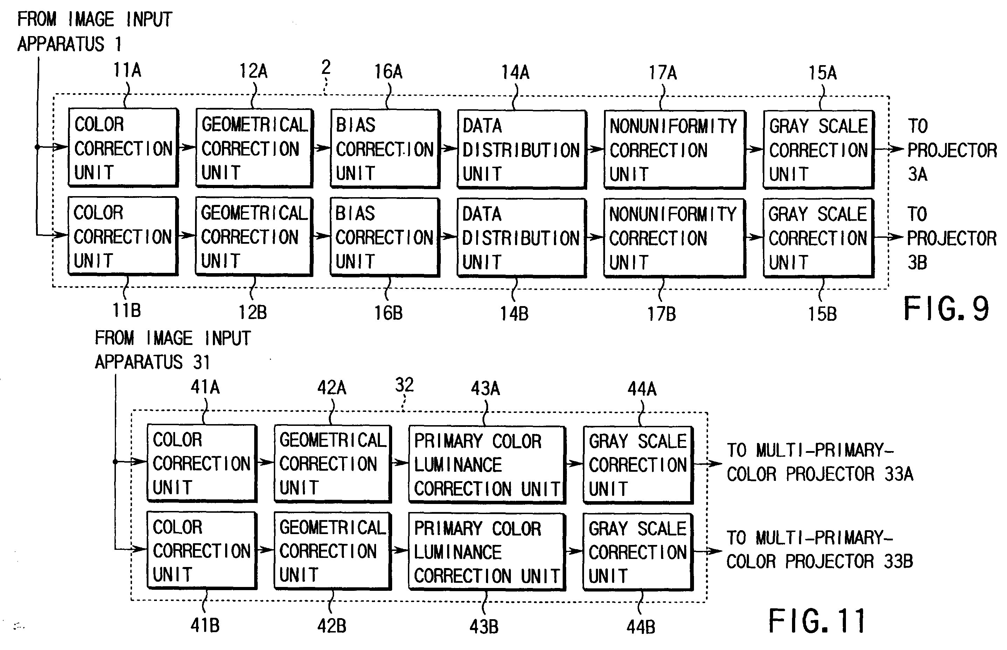

FIG. 9 shows the arrangement of an image data conversion apparatus 2 in a color image display system according to the second embodiment of the present invention. The arrangement of the second embodiment is the same as in the first embodiment except the image data conversion apparatus 2, and a detailed description thereof will be omitted.

The image data conversion apparatus 2 of this embodiment comprises color correction units 11A and 11B, geometrical correction units 12A and 12B, bias correction units 16A and 16B, data distribution units 14A and 14B, nonuniformity correction units 17A and 17B, and gray scale correction units 15A and 15B, which are prepared in correspondence with projectors 3A and 3B shown in FIG. 1.

The arrangement of the image data conversion apparatus 2 of the second embodiment is the same as in the first embodiment except the bias correction units 16A and 16B and nonuniformity correction units 17A and 17B, and a detailed description thereof will be omitted. Only the bias correction units 16A and 16B and nonuniformity correction units 17A and 17B will be described.

[Bias Correction Units 16A and 16B]

In this embodiment, bias correction by the bias correction units 16A and 16B is performed using bias data measured in units of pixels, thereby coping with a case wherein the bias changes in units of pixels, unlike the first embodiment.

Display signal values $R_0(x,y)$, $G_0(x,y)$, and $B_0(x,y)$ of RGB colors corresponding to actual bias at each pixel position, which are obtained on the basis of a color image signals $R_d(x,y)$, $G_d(x,y)$, and $B_d(x,y)$ obtained by sensing partial color images displayed by the projectors 3A and 3B with a digital camera, are given by

$$\begin{pmatrix} R_0(x,y) \\ G_0(x,y) \\ B_0(x,y) \end{pmatrix} = \begin{pmatrix} R_r R_g R_b \\ G_r G_g G_b \\ B_r B_g B_b \end{pmatrix}^{-1} \begin{pmatrix} R_d(x,y) \\ G_d(x,y) \\ B_d(x,y) \end{pmatrix} \qquad \cdots (17)$$

where $R_s$, $G_s$, and $B_s$ ($s = r, g, b$) are R signal value, G signal value, and B signal value, respectively, which are obtained by sensing, with a digital camera, colors in the maximum light emission by $\underline{s}$ primary colors of the projectors 3A and 3B. If the display signal values $R_0(x,y)$, $G_0(x,y)$, and $B_0(x,y)$ cannot be sufficiently accurately measured or calculated, $R_0(x,y) = G_0(x,y) = B_0(x,y) = 0$ may be assumed.

[Nonuniformity Correction Units 17A and 17B]

This embodiment assumes that colors in the partial color images displayed by the projectors 3A and 3B are nonuniform due to the luminance difference between pixel positions.

The luminance difference changes in units of RGB primary colors. Each primary color has a predetermined chromaticity value for each pixel position. In this case, image data $R'''(x,y)$, $G'''(x,y)$, and $B'''(x,y)$ corresponding to the light emission colors of the RGB primary colors and display color image data $R''''(x,y)$, $G''''(x,y)$, and $B''''(x,y)$ have a relation

$$\begin{pmatrix} R'''(x,y) \\ G'''(x,y) \\ B'''(x,y) \end{pmatrix} = \begin{pmatrix} k_r(x,y) & 0 & 0 \\ 0 & k_g(x,y) & 0 \\ 0 & 0 & k_b(x,y) \end{pmatrix} \begin{pmatrix} R''''(x,y) \\ G''''(x,y) \\ B''''(x,y) \end{pmatrix} \qquad \cdots (18)$$

where kr(x,y), kg(x,y), and kb(x,y) are luminance nonuniformities of the RGB primary colors. Hence, the display color image data $R''''(x,y)$, $G''''(x,y)$, and $B''''(x,y)$ after the luminance nonuniformities are corrected are given by

$$\begin{pmatrix} R'''(x,y) \\ G'''(x,y) \\ B'''(x,y) \end{pmatrix} = \begin{pmatrix} 1/k_r(x,y) & 0 & 0 \\ 0 & 1/k_g(x,y) & 0 \\ 0 & 0 & 1/k_b(x,y) \end{pmatrix} \begin{pmatrix} R''(x,y) \\ G''(x,y) \\ B''(x,y) \end{pmatrix}$$

$$= \begin{pmatrix} 1/k_r(x,y) & 0 & 0 \\ 0 & 1/k_g(x,y) & 0 \\ 0 & 0 & 1/k_b(x,y) \end{pmatrix} \begin{pmatrix} K(x,y) & 0 & 0 \\ 0 & K(x,y) & 0 \\ 0 & 0 & K(x,y) \end{pmatrix} \begin{pmatrix} X_r & X_g & X_b \\ Y_r & Y_g & Y_b \\ Z_r & Z_g & Z_b \end{pmatrix}^{-1} \begin{pmatrix} a_{11} & a_{12} & a_{13} \\ a_{21} & a_{22} & a_{23} \\ a_{31} & a_{32} & a_{33} \end{pmatrix} \begin{pmatrix} R(x,y) \\ G(x,y) \\ B(x,y) \end{pmatrix}$$

$$+ \begin{pmatrix} R_b(x,y) \\ G_b(x,y) \\ B_b(x,y) \end{pmatrix} - \begin{pmatrix} R_0(x,y) \\ G_0(x,y) \\ B_0(x,y) \end{pmatrix}$$

$$\cdots (19)$$

On the basis of equation (19), the nonuniformity correction units 17A and 17B correct color nonuniformities by linear conversion using a color nonuniformity correction coefficient $1/k_s(x,y)$ (s = r, g, b ) that changes in units of pixel positions and RGB primary colors.

The value $k_s(x,y)$ is obtained from RGB primary color signals at each pixel position, which are obtained by sensing, with a digital camera, the display images in the maximum light emission of the RGB primary colors of the projectors 3A and 3B.

A digital camera having a sensitivity characteristic linear with respect to luminance or signal values corrected to obtain linear sensing signals with respect to luminance are used.

(Third Embodiment)

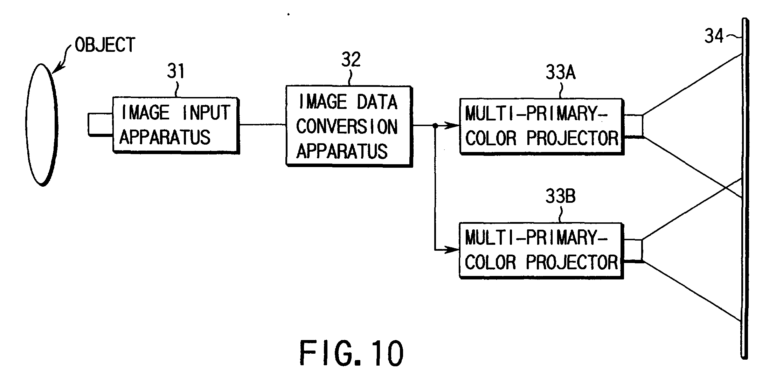

FIG. 10A shows a color image display system according to the third embodiment of the present invention.

This color image display system comprises an image input apparatus 31, image data conversion apparatus 32, multi-primary-color projectors 33A and 33B, and screen 34.

The image input apparatus 31 inputs image data having three channels per pixel, which is obtained by sensing an object using, e.g., a digital camera. The image input apparatus 31 has a sensitivity characteristic linear with respect to luminance, and the input color image data is also linear with respect to luminance.

The input color image data input by the image input apparatus 31 is output to the image data conversion apparatus 32.

The image data conversion apparatus 32 converts the input color image data from the image input apparatus 31 into display color image data for the two multi-primary-color projectors 33A and 33B serving as partial color image display means and outputs the image data to the corresponding multi-primary-color projectors 33A and 33B.

Each of the multi-primary-color projectors 33A and 33B is, e.g., a 6-primary-color projector which projects and displays a partial color image on the screen 34 in accordance with 6-channel display color image data input from the image data conversion apparatus 32. The partial color images are synthetically displayed on the screen 34 as a large color image of one frame. In this case, the partial display images by the projectors 33A and 33B partially overlap on the synthesized display image.

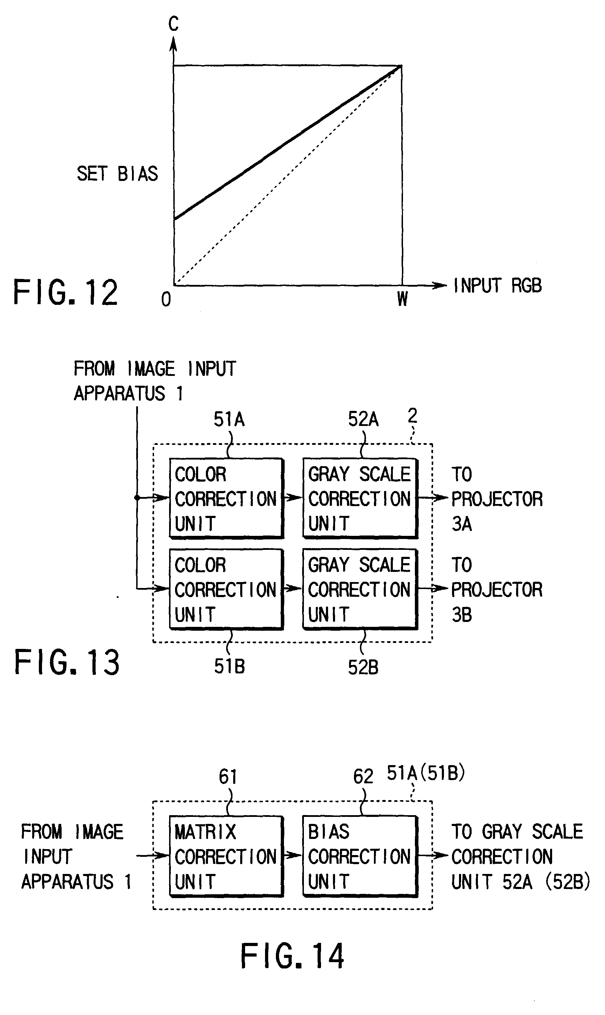

The image data conversion apparatus 32 will be described next in detail with respect to FIG. 11. As shown in FIG. 11, the image data conversion apparatus 32 comprises color correction units 41A and 41B, geometrical correction units 42A and 42B, primary color luminance correction units 43A and 43B, and gray scale correction units 44A and 44B, which are prepared in correspondence with the multi-primary-color projectors 33A and 33B.

[Color Correction Units 41A and 41B]

Input color image data within color regions displayable by the multi-primary-color projectors 33A and 33B are input from the image input apparatus 31 to the color correction units 41A and 41B.

The input color image data do not depend on the characteristics of the multi-primary-color projectors 33A and 33B. The input image data are converted into display color image data having 6-channel signal values unique to the multi-primary-color projectors 33A and 33B in accordance with the color reproduction characteristics of the multi-primary-color projectors 33A and 33B.

The color reproduction characteristics of the multi-primary-color projectors 33A and 33B are obtained, using the measurement system shown in FIG. 3, by causing the multi-primary-color projectors 33A and 33B to project single-color images of the six primary colors onto the screen 34 on the basis of 6-primary-color data (C1, C2, C3, C4, C5, and C6), and measuring XYZ tristimulus values in the maximum light emission of these single-color images using a measurement instrument such as a spectrophotometer.

The obtained color reproduction characteristics are supplied to the color correction units 41A and 41B. Each of the color correction units 41A and 41B converts input color image data R, G, and B into display color image data (C1, C2, C3, C4, C5, and C6) by

$$\begin{pmatrix} C1 \\ C2 \\ C3 \\ C4 \\ C5 \\ C6 \end{pmatrix} = \begin{pmatrix} m_{11}^{(i)} m_{12}^{(i)} m_{13}^{(i)} \\ m_{21}^{(i)} m_{22}^{(i)} m_{23}^{(i)} \\ m_{31}^{(i)} m_{32}^{(i)} m_{33}^{(i)} \\ m_{41}^{(i)} m_{42}^{(i)} m_{43}^{(i)} \\ m_{51}^{(i)} m_{52}^{(i)} m_{53}^{(i)} \\ m_{61}^{(i)} m_{62}^{(i)} m_{63}^{(i)} \end{pmatrix} \begin{pmatrix} a_{11} a_{12} a_{13} \\ a_{21} a_{22} a_{23} \\ a_{31} a_{32} a_{33} \end{pmatrix} \begin{pmatrix} R \\ G \\ B \end{pmatrix} \quad \cdots (20)$$

where $m^{(i)}_{jk}$ (i = 1 to 24, j = 1 to 6, and k = 1 to 3) is an element of a matrix M determined by the color reproduction characteristics of the projectors 33A and 33B, and (i) is determined by the data values of the input color image data R, G, and B.

When the multi-primary-color projectors 33A and 33B are 6-primary-color projectors, 24 matrices are switched in accordance with the region occupied by the data values of the input color image data R, G, and B. In addition, $a_{ij}$ is an element of a matrix A for converting the input color image data R, G, and B into XYZ values.

A method of converting the XYZ values into multi-primary-color image data signals as display color image data by the color correction units 41A and 41B is described in, e.g., Japanese Patent Application No. 11-048042 in detail.

The matrices M and A are set or measured in advance and stored in the color correction units 41A and 41B.

[Geometrical Correction Units 42A and 42B]

The display color image data (C1, C2, C3, C4, C5, and C6) corrected by the color correction units 41A and 41B are input to the geometrical correction units 42A and 42B.

The geometrical correction units 42A and 42B perform geometrical correction on the basis of the display color image data (C1, C2, C3, C4, C5, and C6) such that the partial display images are projected at correct positions by multi-primary-color projectors 33A and 33B. Details of the geometrical correction are disclosed in Jpn. Pat. Appln. KOKAI Publication No. 9-326981, and a detailed description thereof will be omitted.

[Primary Color Luminance Correction Units 43A and 43B (Gain/Bias Correction Means + Data Distribution Means + Nonuniformity Correction Means)]

The display signals (C1, C2, C3, C4, C5, and C6) which have undergone the geometrical correction by the geometrical correction units 42A and 42B are input to the primary color luminance correction units 43A and 43B. The primary color luminance correction units 43A and 43B perform processing corresponding to gain/bias correction, data distribution, and nonuniformity correction. The primary color luminance correction units 43A and 43B correct each primary color signal $C_j(x,y)$ (j = 1 to 6) of each pixel on the basis of equation (21) and outputs the signal to the gray scale correction units 44A and 44B.

$$C'_j(x,y) = \alpha_j(x,y) C_j(x,y) + \beta_j(x,y) \tag{21}$$

where $\alpha_j(x,y)$ and $\beta_j(x,y)$ are correction coefficients used for all processes including bias correction, data distribution, and nonuniformity correction.

On the same assumption as in the second embodiment, the signal value $C'_j(x,y)$ (j = 1 to 6) after gain/bias correction, data distribution, and nonuniformity correction is given by

$$
\begin{pmatrix} C'1(x,y) \\ C'2(x,y) \\ C'3(x,y) \\ C'4(x,y) \\ C'5(x,y) \\ C'6(x,y) \end{pmatrix}
$$

$$
= \begin{pmatrix} 1/k_1(x,y) & 0 & 0 & 0 & 0 & 0 \\ 0 & 1/k_2(x,y) & 0 & 0 & 0 & 0 \\ 0 & 0 & 1/k_3(x,y) & 0 & 0 & 0 \\ 0 & 0 & 0 & 1/k_4(x,y) & 0 & 0 \\ 0 & 0 & 0 & 0 & 1/k_5(x,y) & 0 \\ 0 & 0 & 0 & 0 & 0 & 1/k_6(x,y) \end{pmatrix}
\begin{pmatrix} K(x,y) & 0 & 0 & 0 & 0 & 0 \\ 0 & K(x,y) & 0 & 0 & 0 & 0 \\ 0 & 0 & K(x,y) & 0 & 0 & 0 \\ 0 & 0 & 0 & K(x,y) & 0 & 0 \\ 0 & 0 & 0 & 0 & K(x,y) & 0 \\ 0 & 0 & 0 & 0 & 0 & K(x,y) \end{pmatrix}
\begin{pmatrix} m_{11}^{(i)} & m_{12}^{(i)} & m_{13}^{(i)} \\ m_{21}^{(i)} & m_{22}^{(i)} & m_{23}^{(i)} \\ m_{31}^{(i)} & m_{32}^{(i)} & m_{33}^{(i)} \\ m_{41}^{(i)} & m_{42}^{(i)} & m_{43}^{(i)} \\ m_{51}^{(i)} & m_{52}^{(i)} & m_{53}^{(i)} \\ m_{61}^{(i)} & m_{62}^{(i)} & m_{63}^{(i)} \end{pmatrix}
\begin{pmatrix} a_{11} & a_{12} & a_{13} \\ a_{21} & a_{22} & a_{23} \\ a_{31} & a_{32} & a_{33} \end{pmatrix}
\begin{pmatrix} R(x,y) \\ G(x,y) \\ B(x,y) \end{pmatrix}
$$

$$
+ \begin{pmatrix} C1_b(x,y) \\ C2_b(x,y) \\ C3_b(x,y) \\ C4_b(x,y) \\ C5_b(x,y) \\ C6_b(x,y) \end{pmatrix}
- \begin{pmatrix} C1_0(x,y) \\ C2_0(x,y) \\ C3_0(x,y) \\ C4_0(x,y) \\ C5_0(x,y) \\ C6_0(x,y) \end{pmatrix}
$$

$$\cdots(22)$$

Hence, $\alpha_j(x,y)$ and $\beta_j(x,y)$ are calculated by

$$
\begin{pmatrix}
\alpha_1(x,y)00000 \\
0\alpha_2(x,y)0000 \\
00\alpha_3(x,y)000 \\
000\alpha_4(x,y)00 \\
0000\alpha_5(x,y)0 \\
00000\alpha_6(x,y)
\end{pmatrix}
=
\begin{pmatrix}
1/k_1(x,y)00000 \\
01/k_2(x,y)0000 \\
001/k_3(x,y)000 \\
0001/k_4(x,y)00 \\
00001/k_5(x,y)0 \\
000001/k_6(x,y)
\end{pmatrix}
\begin{pmatrix}
K(x,y)00000 \\
0K(x,y)0000 \\
00K(x,y)000 \\
000K(x,y)00 \\
0000K(x,y)0 \\
00000K(x,y)
\end{pmatrix}
$$

$$\cdots(23)$$

$$
\begin{pmatrix}
\beta_1(x,y) \\
\beta_2(x,y) \\
\beta_3(x,y) \\
\beta_4(x,y) \\
\beta_5(x,y) \\
\beta_6(x,y)
\end{pmatrix}
=
\begin{pmatrix}
1/k_1(x,y)00000 \\
01/k_2(x,y)0000 \\
001/k_3(x,y)000 \\
0001/k_4(x,y)00 \\
00001/k_5(x,y)0 \\
000001/k_6(x,y)
\end{pmatrix}
\begin{pmatrix}
K(x,y)00000 \\
0K(x,y)0000 \\
00K(x,y)000 \\
000K(x,y)00 \\
0000K(x,y)0 \\
00000K(x,y)
\end{pmatrix}
\left(
\begin{pmatrix}
C1_b(x,y) \\
C2_b(x,y) \\
C3_b(x,y) \\
C4_b(x,y) \\
C5_b(x,y) \\
C6_b(x,y)
\end{pmatrix}
-
\begin{pmatrix}
C1_0(x,y) \\
C2_0(x,y) \\
C3_0(x,y) \\
C4_0(x,y) \\
C5_0(x,y) \\
C6_0(x,y)
\end{pmatrix}
\right)
$$

$$\cdots(24)$$

When the signal value $C'_j(x,y)$ ($j$ = 1 to 6) is corrected by

$$
\begin{aligned}
C'_j(x,y) &= \alpha'_j(x,y)C_j(x,y)+\beta_j(x,y) \\
&= p_j(x,y)\alpha_j(x,y)C_j(x,y)+\beta_j(x,y)
\end{aligned}
\tag{25}
$$

such that the display signal values $C'_j(x,y)$ ($j$ = 1 to 6) are ($\beta_1$, $\beta_2$, $\beta_3$, $\beta_4$, $\beta_5$, and $\beta_6$) when the input color image data are (0, 0, 0) or ($C'_{1w}$, $C'_{2w}$, $C'_{3w}$, $C'_{4w}$, $C'_{5w}$, and $C'_{6w}$) when the input color image data are (Rw, Gw, Bw), we have

$$
p_j(x,y)=(C'_{jw}(x,y)-\beta_j(x,y))/(\alpha_j(x,y)C_{jw}(x,y))
\tag{26}
$$

for

$$
C'_{jw}(x,y) = K(x,y)(C_{jw}(x,y) - C_{j0}(x,y))/\, k_j(x,y)
\tag{27}
$$

$$
\begin{pmatrix}
C1w(x,y) \\
C2w(x,y) \\
C3w(x,y) \\
C4w(x,y) \\
C5w(x,y) \\
C6w(x,y)
\end{pmatrix}
=
\begin{pmatrix}
m_{11}^{(i)} m_{12}^{(i)} m_{13}^{(i)} \\
m_{21}^{(i)} m_{22}^{(i)} m_{23}^{(i)} \\
m_{31}^{(i)} m_{32}^{(i)} m_{33}^{(i)} \\
m_{41}^{(i)} m_{42}^{(i)} m_{43}^{(i)} \\
m_{51}^{(i)} m_{52}^{(i)} m_{53}^{(i)} \\
m_{61}^{(i)} m_{62}^{(i)} m_{63}^{(i)}
\end{pmatrix}
\begin{pmatrix}
a_{11}a_{12}a_{13} \\
a_{21}a_{22}a_{23} \\
a_{31}a_{32}a_{33}
\end{pmatrix}
\begin{pmatrix}
Rw(x,y) \\
Gw(x,y) \\
Bw(x,y)
\end{pmatrix}
\quad \cdots(28)
$$

As described above, when the correction coefficients $\alpha'_j(x,y)$ and $\beta_j(x,y)$ are set, and gain correction is done using the coefficient $\alpha'_j(x,y)$, and bias correction is done using the coefficient $\beta_j(x,y)$, a region where the input color image data has a smaller value than the bias and cannot be reproduced can be eliminated at a low-luminance portion, and color misregistration by bias correction can be prevented to enable accurate color reproduction at a high-luminance portion.

FIG. 12 shows the state wherein the color display image is accurately reproduced by gain correction and bias correction using the correction coefficients $\alpha'_j(x,y)$ and $\beta_j(x,y)$.

[Gray Scale Correction Units 44A and 44B]

The arrangement of the gray scale correction units 44A and 44B is the same as described in the first embodiment except that the number of correction data increases in correspondence with the six primary colors, and a detailed description thereof will be omitted.

(Fourth Embodiment)

A color image display system according to the fourth embodiment of the present invention will be described next with reference to FIGS. 13 and 14. The arrangement of the fourth embodiment is the same as that described in the first embodiment except projectors 3A and 3B and image data conversion apparatus 2, and a detailed description thereof will be omitted.

In this embodiment, the image data conversion apparatus 2 comprises color correction units 51A and 51B and gray scale correction units 52A and 52B, which are prepared in correspondence with the projectors 3A and 3B, as shown in FIG. 13.

The color correction unit 51A (51B) has not only the color correction function but also the bias correction and color nonuniformity correction functions and is constructed by a matrix correction unit 61 and bias correction unit 62, as shown in FIG. 14.

[Matrix Correction Unit 61]

Input color image data R(x,y), G(x,y), and B(x,y) within an image region displayable by the projectors 3A and 3B are input from an image input apparatus 1 to the matrix correction unit 61.

The input color image data R(x,y), G(x,y), and B(x,y) are converted, using a matrix M(x,y) corresponding to each pixel position (x,y), which is given by

$$M(x,y) = \begin{pmatrix} m_{11}(x,y) m_{12}(x,y) m_{13}(x,y) \\ m_{21}(x,y) m_{22}(x,y) m_{23}(x,y) \\ m_{31}(x,y) m_{32}(x,y) m_{33}(x,y) \end{pmatrix} \qquad \cdots (29)$$

into matrix correction data R'(x,y), G'(x,y), and B'(x,y) given by

$$\begin{pmatrix} R'(x,y) \\ G'(x,y) \\ B'(x,y) \end{pmatrix} = \begin{pmatrix} m_{11}(x,y) m_{12}(x,y) m_{13}(x,y) \\ m_{21}(x,y) m_{22}(x,y) m_{23}(x,y) \\ m_{31}(x,y) m_{32}(x,y) m_{33}(x,y) \end{pmatrix} \begin{pmatrix} R(x,y) \\ G(x,y) \\ B(x,y) \end{pmatrix} \quad \cdots (30)$$

The matrix M(x,y) is calculated in advance by equation (31) and stored in the matrix correction unit 61.

$$
\begin{pmatrix} m_{11}(x,y)m_{12}(x,y)m_{13}(x,y) \\ m_{21}(x,y)m_{22}(x,y)m_{23}(x,y) \\ m_{31}(x,y)m_{32}(x,y)m_{33}(x,y) \end{pmatrix}
$$

$$
= \begin{pmatrix} t_{11}(x,y)t_{12}(x,y)t_{13}(x,y) \\ t_{21}(x,y)t_{22}(x,y)t_{23}(x,y) \\ t_{31}(x,y)t_{32}(x,y)t_{33}(x,y) \end{pmatrix} \begin{pmatrix} K(x,y)00 \\ 0K(x,y)0 \\ 00K(x,y) \end{pmatrix} \begin{pmatrix} X_r X_g X_b \\ Y_r Y_g Y_b \\ Z_r Z_g Z_b \end{pmatrix}^{-1} \begin{pmatrix} a_{11}a_{12}a_{13} \\ a_{21}a_{22}a_{23} \\ a_{31}a_{32}a_{33} \end{pmatrix}
$$

$$\cdots (31)$$

where $t_{ji}(x,y)$ is an element of a matrix T(x,y) for nonuniformity correction at the pixel position (x,y), and the remaining notation is the same as in the first embodiment. The matrix T(x,y) is calculated by

$$
\begin{pmatrix} t_{11}(x,y)t_{12}(x,y)t_{13}(x,y) \\ t_{21}(x,y)t_{22}(x,y)t_{23}(x,y) \\ t_{31}(x,y)t_{32}(x,y)t_{33}(x,y) \end{pmatrix}
$$

$$\cdots (32)$$

$$
= \begin{pmatrix} p_{11}p_{12}p_{13} \\ p_{21}p_{22}p_{23} \\ p_{31}p_{32}p_{33} \end{pmatrix}^{-1} \begin{pmatrix} q_{11}(x,y)q_{12}(x,y)q_{13}(x,y) \\ q_{21}(x,y)q_{22}(x,y)q_{23}(x,y) \\ q_{31}(x,y)q_{32}(x,y)q_{33}(x,y) \end{pmatrix}
$$

where $q_{ji}(x,y)$ is an element of a matrix Q(x,y) for converting a display image by an i signal of the projector at the pixel position (x,y) into a sensing signal of the jth channel, which is sensed by a digital camera.

The matrix Q(x,y) is calculated by equation (33) on the basis of image data obtained by sensing, with a digital camera, an image of each color, which is displayed on the full screen while setting the input signals to the projectors 3A and 3B as, e.g., signals 1 (255, 0, 0), 2 (0, 255, 0), and 3 (0, 0, 255).

$$
\begin{pmatrix} q_{11}(x,y)q_{12}(x,y)q_{13}(x,y) \\ q_{21}(x,y)q_{22}(x,y)q_{23}(x,y) \\ q_{31}(x,y)q_{32}(x,y)q_{33}(x,y) \end{pmatrix} = \begin{pmatrix} R_1(x,y)R_2(x,y)R_3(x,y) \\ G_1(x,y)G_2(x,y)G_3(x,y) \\ B_1(x,y)B_2(x,y)B_3(x,y) \end{pmatrix} \begin{pmatrix} 255\,00 \\ 0\,255\,0 \\ 00\,255 \end{pmatrix}^{-}
$$

$$\cdots (33)$$

where $R_k$, $G_k$, and $B_k$ (k = 1 to 3) are RGB signals obtained by sensing the kth display image, and $p_{ji}$ is an element of a matrix P for converting a partial color image displayed on the basis of the i signal of the projector at the standard position into an image signal of the jth channel, which is sensed by a digital camera.

The matrix P is calculated by equation (34) on the basis of image data obtained by sensing, with a digital camera, an image of each color, which is displayed at the standard position while setting the input signals to the projectors 3A and 3B as, e.g., signals 1 (255, 0, 0), 2 (0, 255, 0), and 3 (0, 0, 255).

$$\begin{pmatrix} p_{11} p_{12} p_{13} \\ p_{21} p_{22} p_{23} \\ p_{31} p_{32} p_{33} \end{pmatrix} = \begin{pmatrix} R_1 R_2 R_3 \\ G_1 G_2 G_3 \\ B_1 B_2 B_3 \end{pmatrix} \begin{pmatrix} 255 \ 0 \ 0 \\ 0 \ 255 \ 0 \\ 0 \ 0 \ 255 \end{pmatrix}^{-1} \qquad \cdots ( 34 )$$

where $R_k$, $G_k$, and $B_k$ (k = 1 to 3) are RGB signals obtained by sensing the kth display image. Arbitrary display images by the projectors 3A and 3B can be used to calculate the matrix Q(x,y) and matrix P as far as they are displayed by input signals of three independent colors.

[Bias Correction Unit 62]

The matrix correction data R'(x,y), G'(x,y), and B'(x,y) are output to the bias correction unit 62. The bias correction unit 62 subtracts, from the matrix correction data R'(x,y), G'(x,y), and B'(x,y), bias data N(x,y) corresponding to the pixel position (x,y), which is given by

$$N(x,y) = \begin{pmatrix} n_r(x,y) \\ n_g(x,y) \\ n_b(x,y) \end{pmatrix} \qquad \cdots ( 35 )$$

to calculate bias correction data R"(x,y), G"(x,y), and B"(x,y) given by

$$\begin{pmatrix} R''(x,y) \\ G''(x,y) \\ B''(x,y) \end{pmatrix} = \begin{pmatrix} R'(x,y) \\ G'(x,y) \\ B'(x,y) \end{pmatrix} - \begin{pmatrix} n_r(x,y) \\ n_g(x,y) \\ n_b(x,y) \end{pmatrix} \qquad \cdots ( 36 )$$

The bias data N(x,y) is calculated in advance by equation (37) and stored in the bias correction unit 62

$$\begin{pmatrix} n_r(x,y) \\ n_g(x,y) \\ n_b(x,y) \end{pmatrix}$$
$$= \begin{pmatrix} t_{11}(x,y) t_{12}(x,y) t_{13}(x,y) \\ t_{21}(x,y) t_{22}(x,y) t_{23}(x,y) \\ t_{31}(x,y) t_{32}(x,y) t_{33}(x,y) \end{pmatrix} \begin{pmatrix} K(x,y) 0 0 \\ 0 K(x,y) 0 \\ 0 0 K(x,y) \end{pmatrix} \left( \begin{pmatrix} R_b(x,y) \\ G_b(x,y) \\ B_b(x,y) \end{pmatrix} - \begin{pmatrix} R_0(x,y) \\ G_0(x,y) \\ B_0(x,y) \end{pmatrix} \right)$$
$$\cdots ( 37 )$$

The bias correction data R"(x,y), G"(x,y), and B"(x,y) output from the color correction units 51A and 51B are input to the gray scale correction units 52A and 52B. The arrangement of the gray scale correction units 52A and 52B is the same as that described in the first embodiment, and a detailed description thereof will be omitted.

[Projectors 3A and 3B]

A preferred arrangement of the projectors 3A and 3B used in this embodiment will be described next. The projectors 3A and 3B are designed to make the display luminance of each partial display image lower in the overlap region between the partial display images by the projectors 3A and 3B than in the remaining region (the single display region of each partial display image).

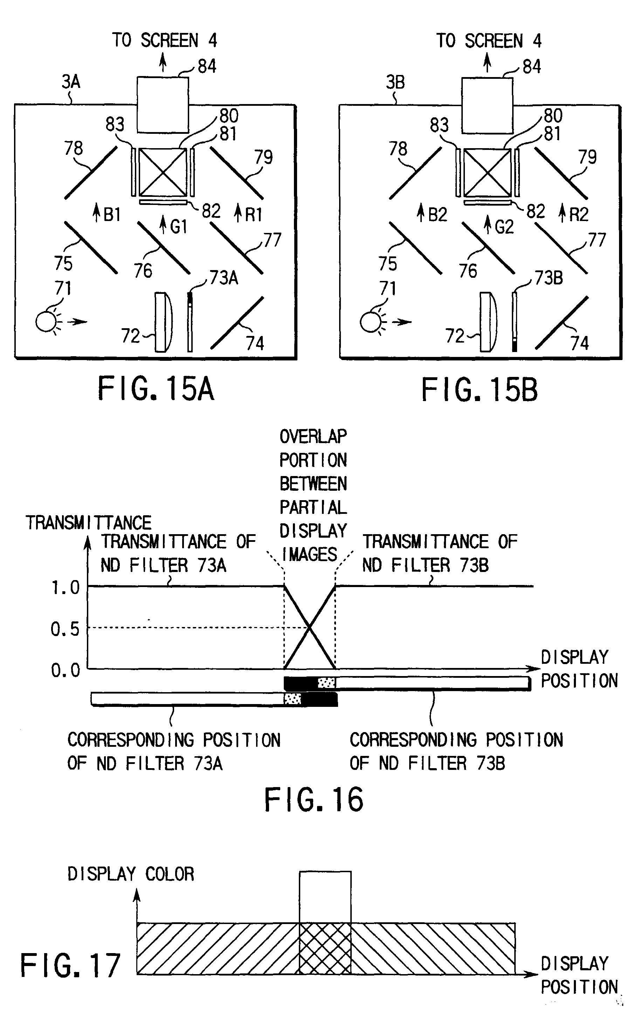

FIGS. 15A and 15B are views showing arrangement examples of the projectors 3A and 3B in the fourth embodiment.

Each of the projectors 3A and 3B comprises a light source 71, a collimator lens 72, an ND filter 73A (73B), aluminum mirrors 74, 75, 78, and 79 as total reflection mirrors, half mirrors 76 and 77, a prism 80, an R liquid crystal panel 81 having an R filter, G liquid crystal panel 82 having a G filter, and B liquid crystal panel 83 having a B filter, which oppose the three light incident surfaces of the prism 80, and an optical system 84 including a projection lens.

In the projector 3A, light from the light source 71 is collimated through the collimator lens 72, transmitted through the ND filter 73A, reflected by the aluminum mirror 74, and then becomes incident on the half mirror 77, as shown in FIG. 15A. The half mirror 77 passes the red spectral component of the incident light and reflects the remaining spectra.

A transmitted light component R1 from the half mirror 77 is reflected by the aluminum mirror 79 and transmitted through the R liquid crystal panel 81 and then becomes incident on the prism 80. The reflected light components from the half mirror 77 become incident on the half mirror 76.

The half mirror 76 reflects the green spectral component of the incident light and passes the blue spectral component. A reflected light component G1 from the half mirror 76 is transmitted through the G liquid crystal panel 82 and becomes incident on the prism 80.

A transmitted light component B1 from the half mirror 76 is sequentially reflected by the aluminum mirrors 75 and 78 and transmitted through the B liquid crystal panel 83 and then becomes incident on the prism 80.

The light components R1, G1, and B1 incident on the prism 80 are synthesized by the prism 80. The exit light is projected onto the screen 4 through the optical system 84 to display a partial color image.

The projector 3B has the sane arrangement as that of the projector 3A except that the ND filter 73B is different from the ND filter 73A, as shown in FIG. 15B.

FIG. 16 shows the transmittance distribution of the ND filter 73A in the projector 3A and that of the ND filter 73B in the projector 3B. As shown in FIG. 16, the ND filters 73A and 73B have symmetric transmittance distributions. In the overlap region between the partial color images displayed by the projectors 3A and 3B, the transmittance decreases toward the edge.

This makes it possible to reduce the increase in bias in the overlap region between the partial color images displayed by the projectors 3A and 3B and consequently avoid any increase in luminance in the overlap region relative to that in the single display region.

FIG. 17 shows biases when the projectors 3A and 3B have no ND filters as a comparative example. If the projectors 3A and 3B have the same bias, the bias in the overlap region of the partial color images is twice that at the portion (single display region) where a single partial color image is displayed by the projector 3A or 3B.

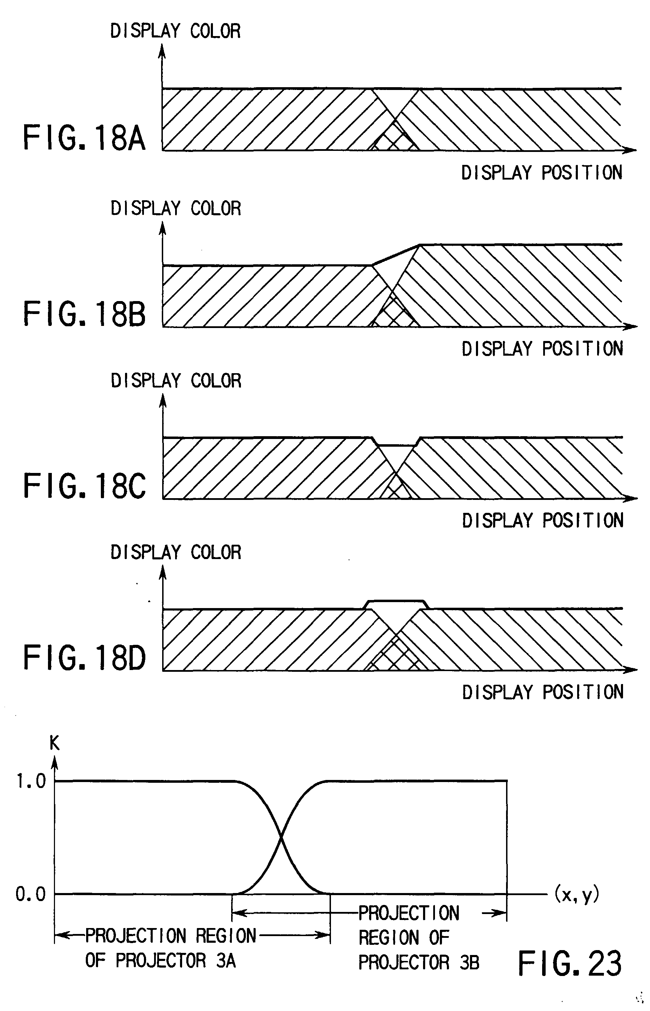

To the contrary, when the projectors 3A and 3B have the ND filters 73A and 73B having transmittance distributions shown in FIG. 18A, respectively, in accordance with this embodiment, the bias in the overlap region equals that in the single display region, as shown in FIG. 18A.

When the projectors 3A and 3B have different biases, a bias distribution as shown in FIG. 18B is obtained by using ND filters having transmittances shown in FIG. 18B. If the transmittance corrected portion of the ND filters completely matches the overlap region of the partial display images, the discontinuity of the bias in the overlap region can be improved.

If the transmittance corrected portion of the ND filters does not completely match the overlap region of the partial display images, and the overlap region is narrower than the transmittance corrected portion, the bias value becomes smaller than the ideal bias value, as shown in FIG. 18C.

If the overlap region is wider than the transmittance corrected portion of the ND filters, the bias value becomes larger than the ideal bias value, as shown in FIG. 18D.

As described above, even when the transmittance corrected portion of the ND filters and the overlap region of the partial display images do not completely match, the discontinuity of bias can be improved as compared to a case without correction.

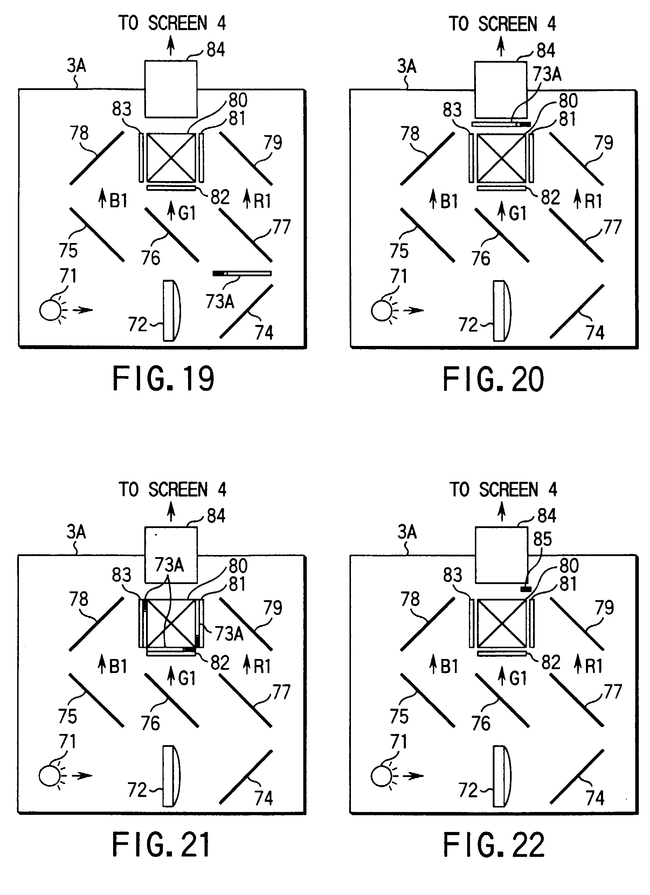

Other arrangement examples of the projectors 3A and 3B will be described next with reference to FIGS. 19 to 22. FIG. 19 shows the projector 3A, though this also applies to the projector 3B.

A description will be made using the same reference numerals as in FIGS. 15A and 15B to denote the same parts in FIGS. 19 to 22. Referring to FIG. 15A, the ND filter 73A is arranged immediately behind the collimator lens 72. However, referring to FIG. 19, the ND filter 73A is inserted between the aluminum mirror 74 and the half mirror 77. Referring to FIG. 20, the ND filter 73A is inserted between the prism 80 and the optical system 84. Referring to FIG. 21, three ND filters 73A are inserted between the prism 80 and the liquid crystal panels 81, 82, and 83.

In either example of the projectors shown in FIGS. 15A, 15B, and 19 to 21, the position of the ND filter can be easily changed to set its direction such that the transmittance corrected portion corresponds to the overlap region between the partial display image by one projector having the ND filter and the partial display image by the other projector.

In the projector 3A shown in FIG. 22, a complete light-shielding plate 85 is located at an end portion between the prism 80 and the optical system 84, thereby dimming light corresponding to the overlap region of the partial display images by the projectors 3A and 3B.

The embodiments of the present invention have been described above. However, the present invention is not limited to the above-described embodiments, and various changes and modifications can be made, as will be described below.

(a) In the above embodiments, the input color image data is RGB image data input by the image input apparatus. However, the present invention is not limited to this, and XYZ image data or display signal values in the partial color image display means may be used.

(b) In the above embodiments, a reflection-type projector is used as a partial color image display means. However, the present invention is not limited to this and can also be applied to a case wherein a display apparatus of another scheme, such as a rear (back projection type) projector, CRT display, or liquid crystal display, is used as the partial color image display means.

(c) In the above embodiments, as a plurality of partial color image display means, two 3-primary-color projectors or two 6-primary-color projectors are used. However, the number of display means and the number of primary colors are not limited to specific values. For example, four 6-primary-color projectors may be used as the partial color image display means.

(d) In the above embodiments, data used to correct the difference in color reproduction characteristic between the partial color image display means by the color correction means is obtained by measurement using a spectrophotometer. Instead of the spectrophotometer, a digital camera may be used. In this case, the spectral sensitivity characteristic of the digital camera is represented by linear conversion of a color matching function, the data for correcting the difference in color reproduction characteristic between the display apparatuses can be accurately measured. In place of the spectrophotometer, a colorimeter or illuminance meter may be used.

(e) In the above embodiments, the color correction means performs $3 \times 3$ matrix conversion or conversion from three primary colors into multiple primary colors. Instead, color conversion based on another scheme, e.g., conversion using a neural network, non-linear conversion including a term of higher order, conversion using a three-dimensional lookup table and interpolation may be executed. In any case, it is important that the color correction means uses data obtained by measuring the color reproduction characteristic data of each partial color image display means.

(f) In the above embodiments, as described in, e.g., the second embodiment, the distribution coefficients K1(x,y) and K2(x,y) having linear distributions as shown in FIG. 8 are used by the data distribution units 14A and 14B. However, distribution coefficients having curve distributions as shown in FIG. 23, which spatially smoothly change in the overlap region between the partial display images by the projectors 3A and 3B as the partial color image display means, may be used.

(g) In the above embodiments, in the projector 3A shown in FIG. 22, a complete light-shielding plate is located at an end portion between the prism and the optical system. However, the position of the light-shielding plate is not limited to this and may be between the optical system and the screen.

Preferred implementations of the present invention disclosed in the above-described embodiments will be listed below.

(1) A color image display system comprising:

a plurality of partial color image display means for, upon receiving display color image data, displaying partial color images to be synthetically displayed as a color image of one frame; and

image data conversion means for converting input color image data into the display color image data to be input to the partial color image display means, characterized in that

the image data conversion means comprises color correction means for correcting the difference in color reproduction characteristic between the partial color image display means.

(1-1) A color image display system according to (1), characterized in that the color correction means performs correction on the input color image data, including non-linear conversion.

(1-2) A color image display system according to (1), characterized in that the color correction means comprises data acquisition means for acquiring data to be used to correct the color reproduction characteristics.

(1-3) A color image display system according to (1-2), characterized in that the data acquisition means comprises at least one of a spectrophotometer, colorimeter, image sensing means, and illuminance meter.

[Effects] Even when the plurality of partial color image display means have different color reproduction characteristics, displayed colors match in the entire color image synthetically displayed as one frame. Hence, discontinuous joints between the partial color images are eliminated, and a high-quality color image can be displayed as a whole.

(2) A color image display system comprising:

a plurality of partial color image display means for, upon receiving display color image data, displaying partial color images to be synthetically displayed as a color image of one frame; and

an image data conversion means for converting input color image data into the display color image data to be input to the partial color image display means, characterized in that

the image data conversion means comprises correction means for correcting a bias of the input color image data so as to display the partial color images on a predetermined set bias in the plurality of partial color image display means.

(2-1) A color image display system according to (2), characterized in that the set bias has a predetermined value.

(2-2) A color image display system according to (2) or (2-1), characterized in that the set bias is one of actual biases of the partial color image display means, with which the projective vector to a predetermined color vector is maximized.

(2-3) A color image display system according to any one of (2), (2-1), and (2-2), characterized in that the set bias is calculated from all color image data input to the correction means and the bias in the total display region of the partial color image display means.

(2-4) A color image display system according to any one of (2) to (2-3), characterized in that the set bias is calculated on the basis of the difference vector in projective vector to a predetermined color vector between the color image data input to the correction means and the actual bias of the partial color image display means.

(2-5) A color image display system according to any one of (2-2) to (2-4), characterized in that the predetermined color vector is the white vector of the partial color image displayed by the partial color image display means.

(2-6) A color image display system according to (2), characterized in that the set bias spatially smoothly changes.

(2-7) A color image display system according to any one of (2) to (2-6), characterized in that the correction means corrects the input image data so as to accurately reproduce a predetermined color (in the above example, ($C'_{1w}$, $C'_{2w}$, $C'_{3w}$, $C'_{4w}$, $C'_{5w}$, and $C'_{6w}$)) of the image displayed by the partial color image display means.

(2-8) A color image display system according to (2-7), characterized in that the correction means performs not only bias correction but also gain correction on the input color image data in units of primary colors.

[Effects] A case wherein the display color image data input to the partial color image display means has a value smaller than the bias and cannot be reproduced is eliminated or reduced.

In addition, when the set bias is calculated from the all input color image data and all biases in the display region, the set bias can be minimized, and color misregistration by the set bias can be minimized. Furthermore, a case wherein the display color image data input to the partial color image display means has a value smaller than the bias and cannot be reproduced is eliminated or reduced.

(3) A color image display system comprising:

a plurality of partial color image display means for, upon receiving display color image data, displaying partial color images to be synthetically displayed as a color image of one frame; and

image data conversion means for converting input color image data into the display color image data to be input to the partial color image display means, characterized in that

the image data conversion means comprises data distribution means for distributing the input color image data to the display color image data to be input to the partial color image display means so as to display, at a predetermined ratio in an overlap region, the partial color images contained in the overlap region between the partial color images displayed by the partial color image display means.

(3-1) A color image display system according to (3), characterized in that the data distribution means distributes the input color image data to the display color image data to be input to the partial color image display means by reducing the ratio toward an end of each partial color image displayed by the partial color image display means.

(3-2) A color image display system according to (3) or (3-1), characterized in that the data distribution means distributes the input color image data to the display color image data to be input to the partial color image display means using a random number.

[Effects] Even in the overlap region where the partial color images displayed by the plurality of partial color image display means overlap, a desired color can be accurately displayed.

In addition, when the input color image data is distributed to the display color image data to be input to the partial color image display means by reducing the ratio toward an end of each partial color image, generation of discontinuous joints due to the color difference between the partial color images by the partial color image display means can be relaxed.

Furthermore, when the input color image data is distributed using a random number, generation of discontinuous joints due to the color difference between the partial color images by the partial color image display means can be more effectively relaxed.

(4) A color image display system comprising:

a plurality of partial color image display means for, upon receiving display color image data, displaying partial color images to be synthetically displayed as a color image of one frame; and

image data conversion means for converting input color image data into the display color image data to be input to the partial color image display means, characterized in that

the image data conversion means comprises nonuniformity correction means for correcting a color nonuniformity in partial color image displayed by the partial color image display means.

(4-1) A color image display system according to (4), characterized in that the nonuniformity correction means corrects the color nonuniformity using image data sensed by a digital camera.

(4-2) A color image display system according to (4) or (4-1), characterized in that the nonuniformity correction means corrects the color nonuniformity by correcting a luminance nonuniformity in each primary color of the partial color image displayed by the partial color image display means.

(4-3) A color image display system according to any one of (4), (4-1), and (4-2), characterized in that the nonuniformity correction means corrects the color nonuniformity by linear conversion using a color nonuniformity correction coefficient which is obtained on the basis of primary color image data obtained by sensing a display image of each primary color with a digital camera.

[Effects] When the partial color image displayed by each partial color image display means is corrected, high-quality display is done in each partial color image, and also discontinuous boundaries between the partial color images due to the color nonuniformity which changes in units of partial color image display means can be prevented.

In addition, when the color nonuniformity is corrected using data obtained by sensing with a digital camera, nonuniformity correction can be performed in units of pixels. In this case, if the color nonuniformity is caused by a luminance nonuniformity of each primary color, data for color nonuniformity correction can be measured using a digital camera having an arbitrary spectral sensitivity characteristic.

Furthermore, when the color nonuniformity is corrected by linear conversion using a color nonuniformity correction coefficient obtained on the basis of primary color image data obtained by sensing the display image of each primary color with a digital camera, color nonuniformities with chromaticity values changing in units of primary colors can also be corrected.

(5) A color image display system comprising:

a plurality of partial color image display means for, upon receiving display color image data, displaying partial color images to be synthetically displayed as a color image of one frame; and

image data conversion means for converting input color image data into the display color image data to be input to the partial color image display means, characterized in that

the partial color image display means is designed to display the partial color images with display luminance lower in an overlap region between the partial color image displayed by one partial color image display means and the partial color image displayed by the other partial color image display means than in a remaining region.

(5-1) A color image display system according to (5), characterized in that each partial color image display means has an ND filter whose transmittance becomes low in the overlap region.

(5-2) A color image display system according to (5), characterized in that the partial color image display means lowers the display luminance in the overlap region by eclipse by a light-shielding member inserted in the optical path.

[Effects] When the partial color image display means are designed to lower the display luminance in the overlap region between the partial color images, an increase in bias in the overlap region can be eliminated or reduced.

In this case, when an ND filter whose transmittance becomes low in the overlap region is used, such a partial color image display means for lowering the display luminance in the overlap region can be easily implemented.

In addition, when the display luminance is lowered in the overlap region by eclipse by the light-shielding member inserted in the optical path, such a partial color image display means for lowering the display luminance in the overlap region can be implemented at low cost.

(6) A color image display system according to any one of (1) to (5), characterized in that each partial color image display means comprises a multi-primary-color display having at least four primary colors.

[Effects] When a multi-primary-color display is used as the partial color image display means, a larger color reproduction region can be realized.

As has been described above, according to the present invention, in the data conversion apparatus for converting input color image data into display color image data to be input to the partial color image display means, color correction, bias correction, data distribution, and color nonuniformity correction are performed, or the plurality of partial color image display means are designed to lower the display luminance of each partial color image in the overlap region between the partial color images displayed by the partial color image display means. Thus, a plurality of partial color images can be synthetically displayed as a color image of one frame having a satisfactory quality.

## Claims

1. A color image display system characterized by comprising:

   a plurality of partial color image display means for displaying partial color images to be synthetically displayed as a color image of one frame, on the basis of display color image data; and
   image data conversion means for converting input color image data into the display color image data on the basis of color reproduction characteristics of said plurality of partial color image display means.

2. A system according to claim 1, characterized in that said image data conversion means further comprises color reproduction characteristic acquisition means for acquiring the color reproduction characteristics of said plurality of partial color image display means.

3. A system according to claim 2, characterized in that said color reproduction characteristic acquisition means comprises at least one of a spectrophotometer, image sensing means, a colorimeter, and an illuminance meter.

4. A system according to claim 1, characterized in that each of said plurality of partial color image display means comprises a multi-primary-color display having at least four primary colors.

5. A system according to claim 1, characterized in that said image data conversion means corrects a bias of the input color image data so as to display the partial color images on a predetermined set bias in said plurality of partial color image display means, thereby converting the input color image data into the display color image data.

6. A system according to claim 1, characterized in that said image data conversion means converts the input color image data into the display color image data so as to display, at a predetermined ratio in an overlap region, the partial color images contained in the overlap region between the partial color images displayed by said partial color image display means.

7. A color image display system characterized by comprising:

   a plurality of partial color image display means for displaying partial color images to be synthetically displayed as a color image of one frame, on the basis of display color image data; and
   image data conversion means for correcting a bias of input color image data so as to display the partial color images on a predetermined set bias in said plurality of partial color image display means, thereby converting the input color image data into the display color image data.

8. A system according to claim 7, characterized in that each of said plurality of partial color image display means comprises a multi-primary-color display having at least four primary colors.

9. A color image display system characterized by comprising:

   a plurality of partial color image display means for displaying partial color images to be synthetically displayed as a color image of one frame, on the basis of display color image data; and
   image data conversion means for converting input color image data into the display color image data so as to display, at a predetermined ratio in an overlap region, the partial color images contained in the overlap region between the partial color images displayed by said partial color image display means.

10. A system according to claim 9, characterized in that each of said plurality of partial color image display means comprises a multi-primary-color display having at least four primary colors.

11. A color image display system characterized by comprising:

a plurality of partial color image display means for displaying partial color images to be synthetically displayed as a color image of one frame, on the basis of display color image data; and
image data conversion means for converting input color image data into the display color image data so as to correct color nonuniformities in the partial color images displayed by said partial color image display means.

12. A system according to claim 11, characterized in that each of said plurality of partial color image display means comprises a multi-primary-color display having at least four primary colors.

13. A color image display system characterized by comprising:

a plurality of partial color image display means for displaying partial color images to be synthetically displayed as a color image of one frame, on the basis of display color image data; and
image data conversion means for converting input color image data into the display color image data to be input to said partial color image display means,
wherein said partial color image display means display the partial color images with display luminance lower in an overlap region between the partial color image displayed by one partial color image display means and the partial color image displayed by the other partial color image display means than in a remaining region.

14. A system according to claim 13, characterized in that each of said plurality of partial color image display means comprises a multi-primary-color display having at least four primary colors.

## FIG. 1

FROM IMAGE INPUT APPARATUS 1

OBJECT

IMAGE INPUT APPARATUS — 1

IMAGE DATA CONVERSION APPARATUS — 2

PROJECTOR — 3A
PROJECTOR — 3B

4

## FIG. 2

COLOR CORRECTION UNIT — 11A
GEOMETRICAL CORRECTION UNIT — 12A
BIAS CORRECTION UNIT — 13A
DATA DISTRIBUTION UNIT — 14A
GRAY SCALE CORRECTION UNIT — 15A → TO PROJECTOR 3A

COLOR CORRECTION UNIT — 11B
GEOMETRICAL CORRECTION UNIT — 12B
BIAS CORRECTION UNIT — 13B
DATA DISTRIBUTION UNIT — 14B
GRAY SCALE CORRECTION UNIT — 15B → TO PROJECTOR 3B

2

TO PROJECTOR 3A

**SPECTROPHOTOMETER**

FIG. 3

MATRIX A, COLOR
REPRODUCTION CHARACTERISTIC
DATA OF PROJECTOR

FIG. 4

FIG.5

FIG.6A

FIG.6B

FIG.6C

FIG. 7    COLOR VECTOR FOR SET BIAS CALCULATION

FIG. 8

FROM IMAGE INPUT
APPARATUS 1

COLOR CORRECTION UNIT — 11A
COLOR CORRECTION UNIT — 11B

GEOMETRICAL CORRECTION UNIT — 12A
GEOMETRICAL CORRECTION UNIT — 12B

2

BIAS CORRECTION UNIT — 16A
BIAS CORRECTION UNIT — 16B

DATA DISTRIBUTION UNIT — 14A
DATA DISTRIBUTION UNIT — 14B

NONUNIFORMITY CORRECTION UNIT — 17A
NONUNIFORMITY CORRECTION UNIT — 17B

GRAY SCALE CORRECTION UNIT — 15A
GRAY SCALE CORRECTION UNIT — 15B

3A
3B

TO PROJECTOR 3A
TO PROJECTOR 3B

FIG. 9

FROM IMAGE INPUT
APPARATUS 31

COLOR CORRECTION UNIT — 41A
COLOR CORRECTION UNIT — 41B

GEOMETRICAL CORRECTION UNIT — 42A
GEOMETRICAL CORRECTION UNIT — 42B

32

PRIMARY COLOR LUMINANCE CORRECTION UNIT — 43A
PRIMARY COLOR LUMINANCE CORRECTION UNIT — 43B

GRAY SCALE CORRECTION UNIT — 44A
GRAY SCALE CORRECTION UNIT — 44B

TO MULTI-PRIMARY-COLOR PROJECTOR 33A
TO MULTI-PRIMARY-COLOR PROJECTOR 33B

FIG. 11

28

FIG. 10

C

SET BIAS

0                    W    INPUT RGB

**FIG. 12**

FROM IMAGE INPUT
APPARATUS 1

51A          52A    2

| COLOR CORRECTION UNIT | GRAY SCALE CORRECTION UNIT | TO PROJECTOR 3A |

| COLOR CORRECTION UNIT | GRAY SCALE CORRECTION UNIT | TO PROJECTOR 3B |

**FIG. 13**          51B          52B

61          62  51A(51B)

FROM IMAGE
INPUT
APPARATUS 1

| MATRIX CORRECTION UNIT | BIAS CORRECTION UNIT | TO GRAY SCALE CORRECTION UNIT 52A (52B) |

**FIG. 14**

FIG. 15A

FIG. 15B

FIG. 16

FIG. 17

DISPLAY COLOR

FIG. 18A

DISPLAY POSITION

DISPLAY COLOR

FIG. 18B

DISPLAY POSITION

DISPLAY COLOR

FIG. 18C

DISPLAY POSITION

DISPLAY COLOR

FIG. 18D

DISPLAY POSITION

K

1.0

0.0

(x, y)

PROJECTION REGION
OF PROJECTOR 3A

PROJECTION
REGION OF
PROJECTOR 3B

FIG. 23

FIG. 19

FIG. 20

FIG. 21

FIG. 22